Europäisches Patentamt

European Patent Office

Office européen des brevets

(19)

(11) Veröffentlichungsnummer : **0 318 475 B1**

# EUROPÄISCHE PATENTSCHRIFT

(12)

(45) Veröffentlichungstag der Patentschrift :
27.11.91 Patentblatt 91/48

(51) Int. Cl.⁵ : **H02J 7/14, H02P 9/30**

(21) Anmeldenummer : 87902374.5

(22) Anmeldetag : 03.04.87

(86) Internationale Anmeldenummer :
PCT/DE87/00147

(87) Internationale Veröffentlichungsnummer :
WO 88/01110 11.02.88 Gazette 88/04

(54) SPANNUNGSREGLER FÜR EINEN GENERATOR.

(30) Priorität : 25.07.86 DE 3625211

(43) Veröffentlichungstag der Anmeldung :
07.06.89 Patentblatt 89/23

(45) Bekanntmachung des Hinweises auf die
Patenterteilung :
27.11.91 Patentblatt 91/48

(84) Benannte Vertragsstaaten :
DE FR GB IT

(56) Entgegenhaltungen :
FR-A- 2 369 734
GB-A- 1 174 875
US-A- 3 868 558
US-A- 4 233 556
US-A- 4 555 657

(73) Patentinhaber : ROBERT BOSCH GMBH
Postfach 50
W-7000 Stuttgart 1 (DE)

(72) Erfinder : CONZELMANN, Gerhard
Wilhelmstrasse 37
W-7022 Leinfelden-Echterdingen (DE)
Erfinder : NAGEL, Karl
Grundstrasse 24
W-7413 Gomaringen (DE)
Erfinder : KOHL, Walter
Monreposstrasse 17
W-7120 Bietigheim (DE)

## Beschreibung

Die Erfindung geht aus von einem Spannungsregler nach der Gattung des Hauptanspruchs. Bekannt ist aus der DE-PS 27 38 897 ein Spannungsregler für einen Generator mit einem Differenzverstärker zum Vergleichen der Generatorspannung mit einer Referenzspannung sowie einer nachfolgenden Reihenschaltung, die aus wenigstens den Elementen Glättungskondensator, Schwellwertstufe, steuerbarer Halbleiterschalter sowie Generator-Erregerwicklung besteht.

Es hat sich jedoch gezeigt, daß die Statik des rein proportional arbeitenden Zweipunktreglers nach dem angegebenen Stand der Technik mit zunehmenden Nennstrom der Generatoren immer unbefriedigender wird, zumal dem System eine höhere Frequenz als seine Eigenfrequenz aufgezwungen werden muß, um das sogenannte Lampenflackern zu verhindern.

Aus der US-A 4 555 657 ist ein Spannungsregler für Generatoren in Kraftfahrzeugen bekannt, der durch Ein- und Ausschalten des Feldstroms einen mittleren Feldstrom im Erregerfeld des Generators erzeugt, so daß die Generatorspannung unabhängig von Last und Drehzahl in etwa konstant bleibt. Dieser Spannungsregler weist eine integrale Komponente auf, die aus der relativen Einschaltdauer des Stromes durch die Erregerwicklung erzeugt wird und über ein integrierendes Glied in den Regelkreis des Spannungsreglers zurückgeführt wird. Dabei ist die rückgeführte Komponente jedoch lediglich in drei Stufen veränderbar.

Auch aus der US-A 3 868 558 ist ein Spannungsregler für ein Kraftfahrzeugbordnetz bekannt, bei dem die Generatorausgangsspannung mit einer Referenzspannung verglichen wird und bei dem diese Referenzspannung erhöht wird, wenn sich der Ladezustand der Batterie verschlechtert. In diesem Spannungsregler wird also das Ladeniveau für eine bestimmte Zeit erhöht..

Aus der GB-A 1 174 875 ist schließlich ein Spannungsregler für einen Generator bekannt, bei dem die Spannungsregelung durch Zu- oder Abschalten des Erregerstroms erfolgt, wobei die für eine zuverlässige Regelung wesentliche Einschaltdauer des Erregerstroms über den vom Erregerstrom verursachten Spannungsabfall an einem Meßwiderstand bestimmt wird.

Die Aufgabe der vorliegenden Erfindung ist, einen Spannungsregler zu schaffen, der in allen Betriebsbereichen und für nahezu jeden Nennstrom zufriedenstellend arbeitet und der sich darüber hinaus noch mit Blick auf die Großserienfertigung leicht integrieren läßt.

Vorteile der Erfindung

Der erfindungsgemäße Spannungsregler erweist sich auch bei hohen Nennströmen als optimal bezüglich seiner Regelungscharakteristik.

Weitere Vorteile der Erfindung ergeben sich in Verbindung mit den Unteransprüchen aus der nachfolgenden Beschreibung eines Ausführungsbeispiels.

Zeichnung

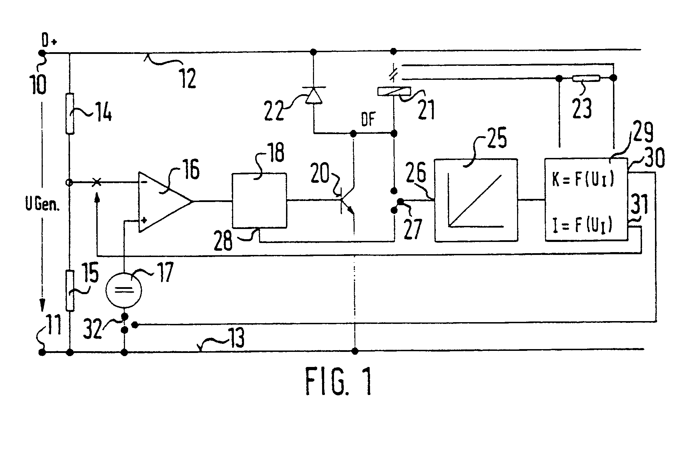

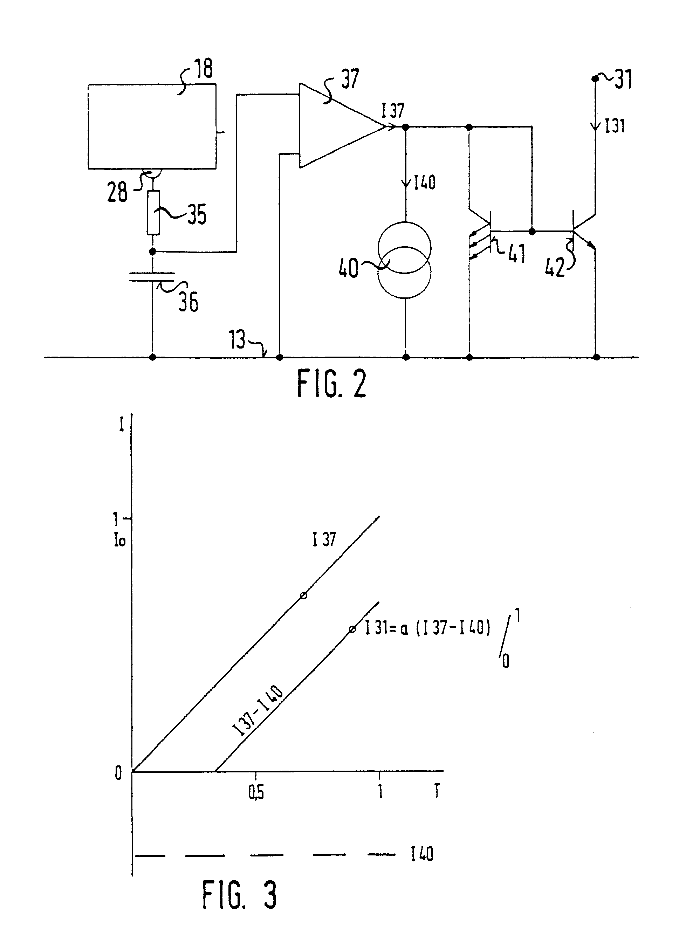

Figur 1 zeigt ein grobes Blockschaltbild eines Ausführungsbeispieles der erfindungsgemäßen Spannungsreglers, Figur 2 ein Beispiel einer Einzelheit des erfindungsgemäßen Teils, sowie Figur 3 ein Signaldiagramm zum leichteren Verständnis des Gegenstandes von Figur 2.

Beschreibung des Ausführungsbeispiels

Das Ausführungsbeispiel betrifft einen Spannungsregler nach der DE-PS 27 38 897, ergänzt um die erfindungsgemäßen Teile. In Figur 1 sind mit 10 und 11 die Eingangsklemmen des Spannungsreglers bezeichnet, die die technischen Bezeichnungen D+ und D- tragen. Beide Klemmen 10 und 11 sind mit Leitungen 12 und 13 verbunden, zwischen denen ein aus zwei Widerständen 14 und 15 bestehender Spannungsteiler liegt. Der Abgriff des Spannungsteilers ist zum Minus-Eingang eines Operationsverstärkers 16 geführt, an dessen Plus-Eingang eine Referenzspannungsquelle 17 angeschlossen ist, die ihrerseits wieder mit der Leitung 13 gekoppelt ist. Ausgangsseitig folgt dem Operationsverstärker 16 ein Schaltungsblock 18, der z.B. den aus der DE-PS 27 38 897 bekannten Schwellwertschalter sowie die weiteren Elemente Schalstufe und Verstärker mit umfassen kann. Ein nachfolgender Schalttransistor 20 liegt in Reihe zu einer Erregerwicklung 21 eines nicht dargestellten Generators und zwischen den beiden Leitungen 12 und 13. Parallel zur Erregerwicklung 21 liegt noch eine Freilaufdiode 22.

Mit 25 ist ein Integrator bezeichnet, der das zu integrierende Schaltsignal über seinen Eingang 26 entweder von einem Ausgang 28 des Schaltungsblocks 18 oder von der Verbindungsstelle von Erregerwicklung 21 und Schalttransistor 20 bezieht. Nachgeschaltet ist dem Integrator 25 ein Funktionsgenerator 29. Dieser besitzt entweder einen Spannungsausgang 30 mit kleinem Innenwiderstand oder einen Stromausgang 31 mit sehr hohem Innenwiderstand. Der Stromausgang 31 ist auf den Minuseingang des Operationsvestärkers 16 zu schalten, andernfalls der Spannungsausgang 30 bei 32 in Reihe zur Referenzspannungsquelle 17.

Die Wirkungsweise des Grundsystems des Spannungsreglers nach Figur 1 ist - wie bereits erläutert - z.B. aus der DE-PS 27 38 897 bekannt. Das Eigangssignal zwischen den beiden Eingangsklemmen 10 und 11 wird auf einen Referenzwert aus der Referenzspannungsquelle 17 mittels des Operationsverstärkers 16 bezogen und abhängig von dessen Ausgangssignal erzeugt der Schaltungsblock 18 ein getaktetes Ansteuersignal für den Schalttransistor 20, der wiederum das Stromfluß-Stromflußpause-Verhältnis der Erregerwicklung 21 des Generators bestimmt. Je nach Eingangssignal zwischen den Klemmen 10 und 11 wird somit das Tastverhältnis des Erregerstroms gewählt und damit die gewünschte Spannung eingeregelt. Die erfindungsgemäße Zusatzschaltung sieht nun vor, daß mehr oder weniger unmittelbar das Schaltsignal des Erregerstroms integriert und ein davon abhängiges Signal die Eingangsschaltung des Spannungsreglers beeinflußt. In Figur 1 ist z.B. 26 bei 27 mit 28 verbunden. Das Schaltsignal für den Integrator wird somit nach einem im Schaltungsblock 18 liegenden Schwellwertschalter abgenommen.

Eine andere Möglichkeit für das Eingangssignal des Integrators 25 ist, das an der Verbindungsstelle von Erregerwicklung 21 und Schalttransistor 20 sich ergebende Signal für die Integration zu wählen.

Der nachfolgende Funktionsgenerator 26 dient dazu, die gewünschten Spannungsverhältnisse den tatsächlichen Gegebenheiten anzupassen. Die unmittelbare Verarbeitung des Integratorausgangssignals ist nämlich deshalb nicht vorteilhaft, da einerseits die Abbildung des Generatorstroms durch den mittleren Feldstrom nich hinreichen gut ist, andererseits aber auch das Gesamtsystem Generator/Bordnetz Nichtlinearitäten enthält, die berücksichtigt werden müssen. Mittels des Funktionsgenerators 29 lassen sich die Signale an den Ausgängen 30 oder 31 derart einstellen, daß die Abweichung der Spannung des Bordnetzes im gesamten Betriebsbereich für nahezu beliebige Generatoren und Bordnetze annähernd ein Minimum wird.

Die Phasenlage des Systems nach Figur 1 ist für einen die Phase nicht drehenden Schaltungsblock 18 dargestellt. Die durch den Integrator 25 und den Funktionsgenerator 29 gebildete Phasenlage ist so zu wählen, daß mit zunehmender relativer Einschaltdauer T des Schalttransistors 20 entweder ein vom invertierenden Eingang des Operationsverstärkers 16 ein mit der Einschaltdauer zunehmender Strom abgezogen oder eine mit der Einschaltdauer T zunehmende Spannung in Reihe zur Referenzspannungsquelle 17 geschaltet wird. Der Fachmann kann selbstverständlich unter Beachtung der Phasenlage auch andere Punkte der Schaltung für die Einspeisung der integralen Komponente wählen.

Anstatt dem Integrator 25 einen Funktionsgenerator 29 nachzuschalten, kann der Integrator 25 selbst nichtlinear arbeitend ausgeführt werden.

In der Regel wird der Integrator 25 einen Kondensator aufweisen. Anstelle dieses Kondensators kann jedoch auch die Induktivität der Erregerwicklung 21 herangezogen werden, da der durch die fließende Strom bereits einen Mittelwert darstellt. Dieser kann mit einem niederohmigen Meßwiderstand 33 in eine zu verarbeitende Spannung umgesetzt werden. Dabei kann der Meßwiderstand 33 in der Stromversorgungsleitung der Erregerwicklung 21 liegen. Im Beispiel von Figur 1 würde er zwischen die Erregerwicklung 21 und die Leitung 12 geschaltet werden. Andererseits ist jedoch auch eine Plazierung auf der gegenüberliegenden Seite der Erregerwicklung 21 möglich.

Figur 2 zeigt ein mögliches Ausführungsbeispiel für Integrator 25 und Funktionsgenerator 29 mit der aus Figur 1 ersichtlichen Verbindung 26, 27 und 28. Ein Widerstand 35 bildet zusammen mit einem Kondensator 36 zwischen dem Ausgang 28 des Schaltungsblocks 18 und der Leitung 13 das Integrierglied 25. Die Spannung über dem Kondensator 36 ist zu einem Operationsverstärker 37 geführt, der die das Integral repräsentierende Spannung über den Kondensator 36 in einen Strom I37 umsetzt. Die Komponenten 35, 36 und 37 entsprechen somit dem Integrator 25 von Figur 1. Der Funktionsgenerator 29 besteht beim Gegenstand von Figur 2 aus einer Konstantstromquelle 40 zwischen dem Ausgang des Verstärkers 37 und der Leitung 13 in Verbindung mit einem aus zwei Transistoren 41 und 42 gebildeten Stromspiegel, dessen Ausgangsstrom I31 am invertierenden Eingang des Operationsverstärkers 16 von Figur 1 eingespeist wird. Der Strom I40 der Stromquelle 40 wird von dem Strom I37 des Integrators abgezogen und die Differenz dem Stromspiegel aus den Transistoren 41 und 42 zugeführt, der zur leichteren Anpassung als Stromteiler ausgeführt ist. Der Transistor 41 enthält die n-fache Anzahl von Emittern des Transistors 42 mit $1 = n = 20$, von denen einer oder mehrere zum Abgleich der integralen Korrektur beim Waferproben auch abtrennbar ausgeführt sein kann bzw. können.

Die Wirkungsweise des Funktionsgenerators 29 ist in Figur 3 dargestellt, die die entsprechenden Ströme als Funktionen der relativen Einschaltdauer T des Schalttransistors 20 wiedergibt, bzw. auch des mittleren Feldstromes, der ja direkt proportional zu T ist. Die Ströme I und auch T sind jeweils normiert. Der Ausgangsstrom I37 steige linear mit der relativen Einschaltdauer T des Transistors 20 von 0 auf I0 (entsprechend 1) an. Von ihm wird der Konstantstrom I40 - in diesem Beispiel etwa $0,33 \times I0$ - abgezogen. Unterschreitet der Integratorausgangsstrom I37 den Konstantstrom I40, so sieht der Transistor 42 noch keinen Strom. Erst wenn der Integratorstrom I37 größer wird, fließt der Strom

$$I31 = a\,(I37 - I40) \text{ für } I31 = 0$$

Mit a ist der Transformationsfaktor des Stromspiegels bezeichnet.

Falls erforderlich, lassen sich mit den Mitteln der elektronischen Schaltungstechnik andere beliebig komplexe Funktionen bilden. Ferner sind auch die sich aus Schaltung und System ergebenden Temperaturgänge entsprechend kompensierbar.

**Patentansprüche**

1. Spannungsregler für Generatoren, insbesondere für den Einsatz in Kraftfahrzeugen, der durch Ein- und Ausschalten des Feldstromes einen mittleren Feldstrom im Erregerfeld des Generators erzeugt, derart, daß die Generatorspannung unabhängig von Last und Drehzahl in etwa konstant bleibt, wobei der Spannungsregler eine integral wirkende Komponente aufweist, die aus der relativen Einschaltdauer des Stromes durch die Erregerwicklung des Generators erzeugt wird und in den Regelkreis des Spannungsreglers zurückgeführt wird, dadurch gekennzeichnet, daß die integral wirkende Komponente zur Berücksichtigung der im Gesamtsystem enthaltenen Nichtlinearitäten stetig veränderlich ist.

2. Spannungsregler nach Anspruch 1, dadurch gekennzeichnet, daß die integral wirkende Komponente mittels eines Integrators (25) erzeugt wird, dem ein Funktionsgenerator (29) zugeordnet ist, der einen nichtlinearen Zusammenhang zwischen der relativen Einschaltdauer des Feldstroms und der in den Regelkreis des Spannungsreglers zurückgeführten Komponente herstellt.

3. Spannungsregler nach Anspruch 1, dadurch gekennzeichnet, daß die integral wirkende Komponente mittels eins nichtlinear arbeitenden Integrators (25,29;35-37,40-42) erzeugt wird.

4. Spannungsregler nach einem der Ansprüche 1 bis 3, dadurch gekennzeichnet, daß die integral wirkende Komponente aus dem der relativen Einschaltdauer des Feldstroms direkt proportionalen Feldstrom über den Spannungsabfall an einem Meßwiderstand (33) gewonnen wird.

**Claims**

1. Voltage regulator for generators, in particular for use in motor vehicles, which generates an average field current in the excitation field of the generator by switching on and off the field current, in such a way that the generator voltage remains approximately constant irrespective of load and speed of rotation, the voltage regulator having an integrally acting component which is generated from the relative duration of connection of the current through the excitation winding of the generator and is fed back into the control circuit of the voltage regulator, characterised in that the integrally acting component for allowing for the non-linearities contained in the entire system is constantly variable.

2. Voltage regulator according to Claim 1, characterised in that the integrally acting component is generated by means of an integrator (25) to which a function generator (29) is assigned which produces a nonlinear relationship between the relative duration of connection of the field current and the component fed back into the control circuit of the voltage regulator.

3. Voltage regulator according to Claim 1, characterised in that the integrally acting component is generated by means of a non-linearly operating integrator (25, 29; 35-37, 40-42).

4. Voltage regulator according to one of Claims 1 to 3, characterised in that the integrally operating component is obtained from the field current, which is directly proportional to the relative duration of connection of the field current, by means of the voltage drop at a measurement resistor (33).

**Revendications**

1. Régulateur de tension pour des générateurs, notamment pour leur mise en oeuvre dans des véhicules automobiles, régulateur qui par enclenchement et déclenchement du courant de champ engendre un courant de champ moyen dans le champ d'excitation du générateur de sorte que la tension du générateur reste à peu près constante, indépendamment de la charge et de la vitesse de rotation, tandis que ce régulateur de tension comporte une composante agissant intégralement, qui est produite à partir de la durée relative d'établissement du courant à travers l'enroulement d'excitation du générateur et qui est recyclée dans le circuit de réglage du régulateur de tension, régulateur de tension caractérisé en ce que, pour tenir compte des non linéarités que présente l'ensemble du système, la composante agissant intégralement est constamment modifiable.

2. Régulateur de tension selon la revendication 1, caractérisé en ce que la composante agissant intégralement est obtenue au moyen d'un intégrateur (25), auquel est associé un générateur de fonction (29) qui réalise une corrélation non linéaire entre la durée relative d'établissement du courant de champ et la composante recyclée dans le circuit de réglage du régulateur de tension.

3. Régulateur de tension selon la revendication 1, caractérisé en ce que la composante agissant intégralement est obtenue au moyen d'un intégrateur (25, 29; 35 - 37; 40 - 42) fonctionnant de façon non linéaire.

4. Régulateur selon une des revendications 1 à 3, caractérisé en ce que la composante agissant intégralement est obtenue à partir du courant moyen de champ, directement proportionnel à la durée relative d'établissement de ce courant de champ, par l'intermédiaire de la chute de tension sur une résistance de mesure (33).

FIG. 1

FIG. 2

FIG. 3